# EUROPÄISCHE PATENTANMELDUNG

(11) **EP 4 364 865 A1**
(43) Veröffentlichungstag der Anmeldung: **08.05.2024**
(21) Anmeldenummer: 23204290.3
(22) Anmeldetag: 18.10.2023
(51) Int. Cl.: B09B 3/00, C22B 3/10, C01G 55/00, C22B 3/44, C22B 11/00

(54) **VERFAHREN UND VORRICHTUNG ZUR TRENNUNG VON IRIDIUM AUS MINDESTENS EINEM AUSGANGSMATERIAL**

(30) Priorität: 07.11.2022 DE 102022211703
(71) Anmelder: Robert Bosch GmbH, 70442 Stuttgart (DE)
(72) Erfinder: Baldizzone, Claudio, 70174 Stuttgart (DE)

(57) **Zusammenfassung**

Die Erfindung betrifft ein Verfahren zur Trennung von Iridium aus mindestens einem Ausgangsmaterial (10), welches Iridium sowie Palladium und/oder Platin enthält. Das Ausgangsmaterial (10) wird in einer wässrigen Lösung (20) mit einem pH-Wert von maximal 1 mit mindestens einem Oxidationsmittel behandelt wird und anschließend in einer wässrigen Lösung (20) mit einem pH-Wert von maximal 1 abwechselnd mit mindestens einem Oxidationsmittel behandelt und mit Wasserstoff behandelt wird. Eine Vorrichtung (30) zur Gewinnung von Iridium aus mindestens einem Ausgangsmaterial (10), welches Iridium sowie Palladium und/oder Platin enthält, ist eingerichtet, um die Schritte eines Verfahrens durchzuführen.

## Beschreibung

Die vorliegende Erfindung betrifft ein Verfahren und eine Vorrichtung zur Trennung von Iridium aus mindestens einem Ausgangsmaterial, welches Iridium sowie Platin und/oder Palladium enthält.

### Stand der Technik

Die Gewinnung von Iridium aus Erzen kann beispielsweise hydrometallurgisch erfolgen. Dabei wird das zu gewinnende Metall durch Komplexbildung in wässrige Lösung gebracht. Dies kann durch Behandlung des Erzes mit Königswasser erfolgen. Auch zur Rückgewinnung von Iridium aus Altmetallen kann ein hydrometallurgisches Verfahren angewandt werden.

In Erzen kommt Iridium in der Regel vergesellschaftet mit Platin und Palladium vor. In Altmetallen ist es häufig mit Palladium oder mit Platin legiert. Wenn die Rückgewinnung von Iridium aus Altmetallen nicht hydrometallurgisch, sondern pyrometallurgisch erfolgt, so werden dabei häufig Anodenschlämme erhalten, in denen Iridium mit anderen Platingruppenmetallen wie insbesondere Palladium und Platin vermischt ist.

In dem Artikel N. Hodnik, C. Baldizzone, Platinum recycling going green via induced surface potential alteration enabling fast and efficient dissolution, 2016, Nature Communications, Volume 7, wird beschrieben, wie aus einem Industriekatalysator Platin und Palladium durch abwechselnde Behandlung mit Ozon und mit Kohlenmonoxid zurückgewonnen werden können.

Die DE 10 2015 118 279 A1 beschreibt die Gewinnung von Platin aus einem platinhaltigen Material durch abwechselnde Behandlung mit Ozon und mit Kohlenmonoxid in Gegenwart eines Komplexbildners.

### Offenbarung der Erfindung

In dem Verfahren zur Trennung von Iridium aus mindestens einem Ausgangsmaterial, welches die Metalle Iridium sowie Palladium und/oder Platin enthält, wird das Ausgangsmaterial zunächst in einer wässrigen Lösung mit einem pH-Wert mit maximal 1 mit mindestens einem Oxidationsmittel behandelt. Anschließend wird es in einer wässrigen Lösung mit einem pH-Wert von maximal 1 abwechselnd mit mindestens einem Oxidationsmittel und mit Wasserstoff behandelt. Diesem Verfahren liegt die Erkenntnis zugrunde, dass die alleinige Behandlung mit einem Oxidationsmittel in einer stark sauren Lösung nicht ausreicht, um Iridium aus einem Ausgangsmaterial aufzulösen. Vielmehr gelingt dies nur in einem transienten Auflösungsprozess, indem die Oberfläche des Ausgangsmaterials durch eine Reduktion mit Wasserstoff immer wieder von Oberflächenoxiden befreit wird. Palladium und Platin können hingegen entweder unter alleiniger Anwendung eines Oxidationsmittels in Lösung gebracht werden oder unter abwechselnder Behandlung mit einem Oxidationsmittel und einem Reduktionsmittel, welches ein schwächeres Redoxpotential als Wasserstoff aufweist und deshalb nicht dazu in der Lage ist, einen transienten Auflösungsprozess von Iridium auszulösen. Somit ist es möglich, Palladium und/oder Platin zunächst aus dem Ausgangsmaterial herauszulösen und so von diesem abzutrennen, bevor schließlich eine Auflösung des Iridiums erfolgt. Würde hingegen mit einer abwechselnden Behandlung des Ausgangsmaterials mit dem Oxidationsmittel und dem Wasserstoff begonnen, so würden sowohl das Iridium als auch das im Ausgangsmaterial enthaltene Palladium und/oder Platin in Lösung überführt und müssten anschließend durch einen separates Trennverfahren voneinander getrennt werden.

Gegenüber bekannten hydrometallurgischen und pyrometallurgischen Verfahren zur Iridiumgewinnung, in denen ein Gemisch dieser Metalle erhalten wird, hat das vorliegende Verfahren also den Vorteil, dass eine anschließende selektive Ausfällung der Metalle aus einer Lösung nicht erforderlich ist. Diese bisher angewandte selektive Ausfällung hat den Nachteil, dass sie prozesstechnisch aufwendig ist, viel Zeit in Anspruch nimmt und geringe Ausbeuten von weniger als 70 % liefert.

Das Verfahren ist für alle Arten von Ausgangsmaterialien geeignet, in denen Iridium neben Platin und/oder Palladium vorliegt. Dies umfasst sowohl Erze, in denen Iridium mit Platin und/oder Palladium vergesellschaftet ist, als auch Altmetalle, in denen Iridium mit Platin und/oder Palladium legiert ist.

Wenn das Ausgangsmaterial Iridium und Palladium aber kein Platin enthält, dann ist vorzugsweise vorgesehen, dass das Ausgangsmaterial zunächst in einer wässrigen Lösung mit mindestens einem Oxidationsmittel behandelt wird, um das Palladium in Lösung zu bringen. Anschließend wird das so behandelte Ausgangsmaterial in einer weiteren wässrigen Lösung abwechselnd mit mindestens einem Oxidationsmittel und mit Wasserstoff behandelt, um auch das Iridium in Lösung zu bringen. Das Palladium und das Iridium können anschließend aus den beiden Lösungen reduktiv ausgewählt werden.

Wenn das Ausgangsmaterial Iridium und Platin aber kein Palladium enthält, wird es vorzugsweise zunächst in einer wässrigen Lösung abwechselnd mit mindestens einem Oxidationsmittel und mit Kohlenmonoxid behandelt. Hierbei geht das Platin transient in Lösung. Das Reduktionsvermögen des Kohlenmonoxids reicht allerdings nicht aus, um auch das Iridium transient aufzulösen. Wenn das so behandelte Ausgangsmaterial jedoch anschließend in einer weiteren wässrigen Lösung abwechselnd mit einem Oxidationsmittel und mit Wasserstoff behandelt wird, erfolgt auch eine Auslösung des Iridiums. Anschließend können das Platin und das Iridium aus den beiden Lösungen separat ausgefällt werden.

Wenn das Ausgangsmaterial sowohl Palladium als auch Platin und Iridium enthält, ist in dem Verfahren vorzugsweise vorgesehen, das Ausgangsmaterial zunächst in einer wässrigen Lösung nur mit einem Oxidationsmittel ohne Anwendung eines Reduktionsmittels zu behandeln. Hierbei geht das Palladium in Lösung. Diese Reaktionsbedingungen reichen allerdings nicht aus, um auch Platin aufzulösen. Das Ausgangsmaterial, welches nun nur noch Platin und Iridium enthält, kann also von der palladiumhaltigen, wässrigen Lösung abgetrennt werden und anschließend in weiteren Verfahrensschritten abwechselnd mit einem Oxidationsmittel und mit Kohlenmonoxid behandelt werden. Hierbei erfolgt eine transiente Auflösung des Platins. Anschließend wird das vom Platin befreite Ausgangsmaterial in eine weitere wässrige Lösung eingebracht und in dieser abwechselnd mit einem Oxidationsmittel und mit Wasserstoff behandelt. So wird schließlich auch das Iridium aufgelöst. Es werden drei wässrige Lösungen erhalten, die jeweils eines der Metalle Palladium, Platin oder Iridium in kationischer löslicher Form enthalten, wobei die Kationen insbesondere mit in der wässrigen Lösung enthaltenen Anionen komplexiert sind. Die Metalle können aus diesen drei Lösungen schließlich reduktiv ausgefällt werden.

Es ist bevorzugt, dass zwischen einer Behandlung des Ausgangsmaterials mit einem Oxidationsmittel und mit Kohlenmonoxid und/oder zwischen einer Behandlung des Ausgangsmaterials mit einem Oxidationsmittel und mit Wasserstoff ein Inertgas in die wässrige Lösung eingeleitet wird. Bei dem in Erdgas kann es sich insbesondere um Argon oder um Stickstoff handeln. Auf diese Weise wird Oxidationsmittel bzw. Reduktionsmittel, das im transienten Auflösungsprozess nicht abreagiert hat, aus der Lösung ausgetrieben, um zu verhindern, dass es mit dem Oxidationsmittel bzw. Reduktionsmittel reagiert, das anschließend in die Lösung eingeleitet wird. Hierdurch wird ein unnötig hoher Verbrauch an Oxidationsmittel bzw. dem Reduktionsmittel Kohlenmonoxid und/oder Wasserstoff vermieden und es werden exotherme Reaktionen zwischen dem Oxidationsmittel und dem Reduktionsmittel in der wässrigen Lösung verhindert.

Das Oxidationsmittel ist vorzugsweise ein Gas. Gasförmige Oxidationsmittel haben den Vorteil, dass sie nicht nur schnell in die wässrige Lösung eingeleitet werden können, sondern auch schnell wieder aus dieser ausgetrieben werden können. Außerdem kann ein Einleitungselement, dass zum Einleiten des gasförmigen Kohlenmonoxids und/oder Wasserstoffs dient, hierbei auch zum Einleiten des Oxidationsmittels verwendet werden. Besonders bevorzugt enthält das Oxidationsmittel Ozon. Insbesondere kann es sich um ein Gemisch aus Sauerstoff und Ozon handeln, wie es von einem Ozonisator bereitgestellt wird.

Der Ozongehalt des Oxidationsmittels liegt ganz besonders im Bereich von 3 Vol.-% bis 5 Vol.-%. Für eine einfache Verfahrensführung ist es weiterhin bevorzugt, dass sowohl für die Auflösung des Palladiums und/oder Platins als auch für die Auflösung des Iridiums dasselbe Oxidationsmittel verwendet wird.

Die wässrige Lösung enthält bevorzugt Chloridionen, wobei eine Konzentration der Chloridionen im Bereich von 0,1 mol/l bis 10,0 mol/l besonders bevorzugt ist und eine Konzentration im Bereich von 0,1 mol/l bis 5,0 mol/l ganz besonders bevorzugt ist. Chloridionen bilden mit Palladiumkationen, Platinkationen und Iridiumkationen jeweils Chlorokomplexe und stabilisieren diese hierdurch in der wässrigen Lösung.

Die wässrige Lösung ist bevorzugt eine Salzsäure mit einer Konzentration im Bereich von 0,1 mol/l bis 10,0 mol/I, besonders bevorzugt im Bereich von 0,1 mol/l bis 5,0 mol/l. Eine Salzsäure dieser Konzentration weist sowohl den für das Verfahren erforderlichen pH-Wert als auch den bevorzugten Chloridionengehalt auf. Grundsätzlich ist es aber auch möglich, den pH-Wert der wässrigen Lösung mittels einer anderen Säure wie insbesondere Schwefelsäure oder Salpetersäure einzustellen und die Chloridionen dann in Form eines Salzes insbesondere in Form von Natriumchlorid zuzufügen. Um eine Übersättigung der wässrigen Lösung, die zu einer unerwünschten Ausfällung von Salzen führen könnte, zu vermeiden, ist es hierbei bevorzugt, dass die Konzentration an Natriumchlorid an der Lösung 4,0 mol/l nicht überschreitet.

Um Iridium sowie Palladium und/oder Platin aus separaten Lösungen ausfällen zu können, ohne Lösungen zu erhalten, welche mehrere dieser Metalle enthalten, ist es bevorzugt, dass das Ausgangsmaterial jeweils nach dem Auflösen eines der Metalle von der bisherigen wässrigen Lösung getrennt und in eine neue wässrige Lösung eingebracht wird. Die Zusammensetzung der wässrigen Lösung ist jedoch für alle Auflösungsschritte vorzugsweise gleich, um die gesamte in dem Verfahren benötige wässrige Lösung aus einem einzigen Vorratstank entnehmen zu können, sodass keine unterschiedlichen Lösungen vorgehalten werden müssen.

Die Vorrichtung zur Trennung von Iridium aus mindestens einem Ausgansmaterial, welches Iridium sowie Palladium und/oder Platin enthält, ist eingerichtet, um die Schritte des Verfahrens durchzuführen. Hierzu weist sie insbesondere einen Reaktionsraum zur Bevorratung des Ausgangsmaterials und der wässrigen Lösung auf, sowie mindestens eine Einleitungsstelle durch welche das Oxidationsmittel sowie Wasserstoff und gegebenenfalls Kohlenmonoxid und/oder ein Inertgas eingeleitet werden können.

### Kurze Beschreibung der Zeichnungen

Ausführungsbeispiele der Erfindung sind in den Zeichnungen dargestellt und werden in der nachfolgenden Beschreibung näher erläutert.
Figur 1 zeigt eine schematische Darstellung einer Vorrichtung gemäß einem Ausführungsbeispiel der Erfindung.
Figur 2 zeigt ein Ablaufdiagramm eines Ausführungsbeispiels des erfindungsgemäßen Verfahrens.
Figur 3 zeigt schematisch eine andere Vorrichtung gemäß einem anderen Ausführungsbeispiel der Erfindung.
Figur 4 zeigt ein Ablaufdiagramm eines anderen Ausführungsbeispiels des erfindungsgemäßen Verfahrens.
Figur 5 zeigt ein Ablaufdiagramm noch eines anderen Ausführungsbeispiels eines erfindungsgemäßen Verfahrens.

### Ausführungsbeispiele der Erfindung

In den im Folgenden beschriebenen Ausführungsbeispielen der Erfindung wird ein Ausgangsmaterial 10 in wässrigen Lösungen 20 behandelt, um daraus Iridium sowie Palladium und/oder Platin zu gewinnen. Bei der wässrigen Lösung 20 handelt es sich beispielsweise um eine Salzsäure mit einer Konzentration von 1,0 mol/l und einem pH-Wert von 0.

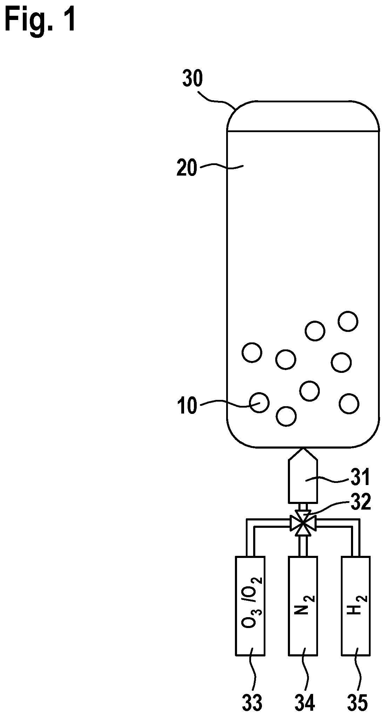

Figur 1 zeigt eine Vorrichtung 30 gemäß einem ersten Ausführungsbeispiel der Erfindung, in der das Ausgangsmaterial 10 und die wässrige Lösung 20 bevorratet sind. Eine Einleitungsdüse 31 ist dazu vorgesehen, um unterschiedliche Gase in die Vorrichtung 30 einzuleiten. Hierzu ist sie über ein Ventil 32 mit mehreren Gasquellen 33 bis 35 verbunden. Die erste Gasquelle 33 stellt ein Gemisch aus Ozon und Sauerstoff bereit, welches 3 Vol.-% Ozon enthält und als Oxidationsmittel fungieren kann. Die zweite Gasquelle 34 stellt Stickstoff bereit. Die dritte Gasquelle 35 stellt Wasserstoff bereit. Um Verfahren gemäß unterschiedlichen Ausführungsbeispielen der Erfindung durchzuführen, sind mehrere Behälter vorgesehen, welche in Figur 1 nicht dargestellt sind. Sammelbehälter dienen dazu, eine wässrige Lösung 20 nach einem Auflösungsschritt zu sammeln, wenn sie aus der Vorrichtung 30 entnommen wurde. Ein Vorratsbehälter bevorratet weitere wässrige Lösung 20, die in die Vorrichtung 30 eingefüllt werden kann, nachdem die zuvor verwendete Lösung 20 in einen Sammelbehälter überführt wurde. Der Vorratsbehälter und die Sammelbehälter können mittels Leitungen mit der Vorrichtung 30 verbunden sein oder es kann auch vorgesehen sein, dass wässrige Lösungen 20 manuell aus der Vorrichtung 30 in einen Sammelbehälter abgelassen werden und die Vorrichtung 30 manuell mit frischer wässriger Lösung 20 befüllt wird.

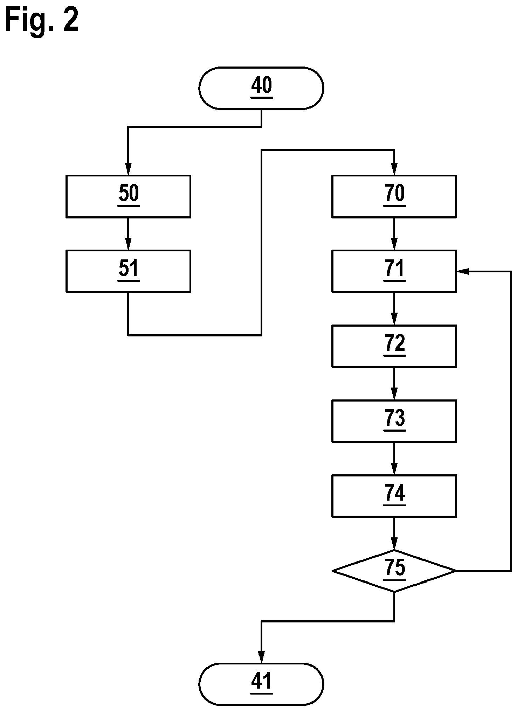

In einem ersten Ausführungsbeispiel des erfindungsgemäßen Verfahrens handelt es sich bei dem Ausgangsmaterial 10 um ein Material, welches Iridium und Palladium aber kein Platin enthält. Der Ablauf dieses Verfahrens ist in Figur 2 dargestellt. Nach dem Start 40 des Verfahrens wird das Ausgangsmaterial 10 in die wässrige Lösung 20 eingebracht 50. Anschließend wird das Ozon/SauerstoffGemisch in die Vorrichtung 30 eingeleitet 51, bis das gesamte Palladium in der wässrigen Lösung 20 aufgelöst wurde. Die wässrige Lösung 20, welche nun gelöste Chlorokomplexe des Palladiums enthält, wird vom Ausgangsmaterial 10 abgetrennt und frische wässrige Lösung 20 wird in die Vorrichtung 30 eingebracht 70. Nun folgen nacheinander ein erneutes Einleiten 71 des Ozon/Sauerstoff-Gemischs ein Einleiten 72 von Stickstoff, ein Einleiten 73 von Wasserstoff und ein nochmaliges Einleiten 74 von Stickstoff in die wässrige Lösung 20. Die Schritte 71 bis 74 werden so oft wiederholt, bis eine Prüfung 75 beispielsweise mittels eines nicht dargestellten Sensors in der Vorrichtung 30 ergibt, dass die Iridiumkonzentration in der Lösung 20 nicht mehr ansteigt und demnach das gesamte Iridium aus dem Ausgangsmaterial 10 herausgelöst wurde. Anschließend erfolgt ein Beenden 41 des Verfahrens. Aus der zuerst abgetrennten wässrigen Lösung 20 kann nun das Palladium isoliert werden und aus der anschließend verwendeten wässrigen Lösung 20 die nun Chlorokomplexe des Iridiums enthält, kann das Iridium isoliert werden.

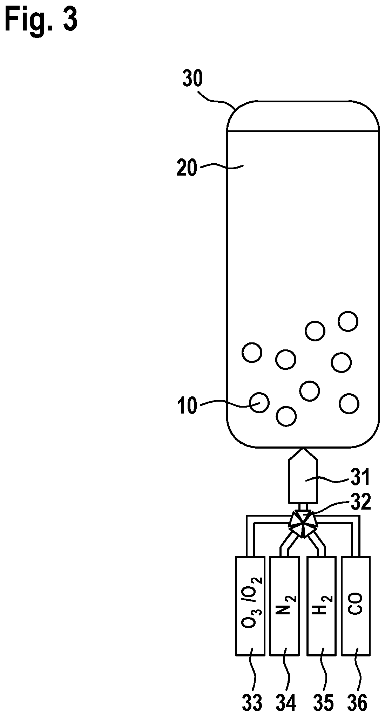

Figur 3 zeigt ein zweites Ausführungsbeispiel der erfindungsgemäßen Vorrichtung. Dieses unterscheidet sich vom ersten Ausführungsbeispiel darin, dass das Ventil 32 weiterhin mit einer vierten Gasquelle 36 verbunden ist. Die vierte Gasquelle 36 stellt Kohlenmonoxid oder ein Gemisch von Kohlenmonoxid mit einem Trägergas zur Verfügung, welches mindestens 5 Vol.-% enthält. Während die Vorrichtung gemäß dem ersten Ausführungsbeispiel dazu geeignet ist, ein Ausgangsmaterial 10 behandeln, welches Iridium und Palladium aber kein Platin enthält, ist die Vorrichtung gemäß dem zweiten Ausführungsbeispiel dazu geeignet, um ein Ausgangsmaterial 10 behandeln, welches Iridium und Platin und gegebenenfalls zusätzlich auch Palladium enthält.

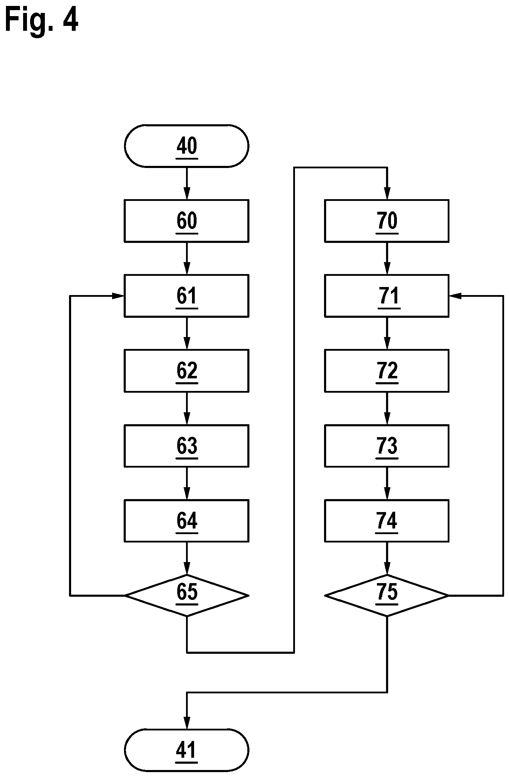

Figur 4 zeigt den Ablauf eines Ausführungsbeispiels des Verfahrens, in dem Iridium aus einem Ausgangsmaterial 10 gewonnen wird, welches neben dem Iridium, Platin aber kein Palladium enthält. Nach dem Start 40 des Verfahrens erfolgt zunächst ein Einbringen 60 des Ausgangsmaterials 10 in die wässrige Lösung 20. Es folgt ein Einleiten 61 von Ozon, ein Einleiten 62 von Stickstoff, ein Einleiten 63 von Kohlenmonoxid und ein erneutes Einleiten 64 von Stickstoff in die wässrige Lösung 20. Diese Schritte 61 bis 64 werden so oft wiederholt, bis eine Prüfung 65 ergibt, dass die Platinkonzentration der wässrigen Lösung nicht mehr ansteigt. Die so erhaltenen wässrige Lösung 20, welche Chlorokomplexe des Platins enthält, wird aus der Vorrichtung 30 entfernt und das Ausgangsmaterial 10 wird mit frischer wässriger Lösung 20 versetzt 70. Anschließend werden die Verfahrensschritte 71 bis 74 in derselben Weise wie bei der Behandlung eines Ausgangsmaterials, welches Iridium und Palladium aber kein Platin enthält so oft wiederholt, bis eine Prüfung 75 ergibt, dass die Iridiumkonzentration in der wässrigen Lösung 20 nicht mehr ansteigt. Danach erfolgt ein Beenden 41 des Verfahrens. Auf diese Weise werden eine platinhaltige und eine iridiumhaltige wässrige Lösung 20 erhalten, aus denen das jeweilige Metall jeweils ausgefällt werden kann.

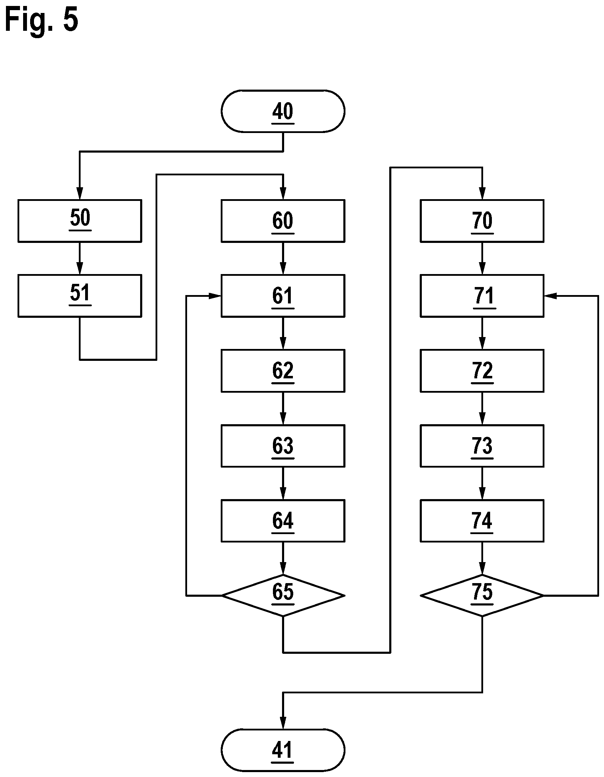

Wenn das Ausgangsmaterial 10 Palladium, Platin und Iridium enthält, werden diese drei Metalle nacheinander mittels eines Ausführungsbeispiels des erfindungsgemäßen Verfahrens in einer Weise in Lösung gebracht, die in Figur 5 dargestellt ist. Nach dem Start 40 des Verfahrens, laufen zunächst die Verfahrensschritte 50 und 51 in derselben Weise ab, wie bei der Behandlung eines Ausführungsmaterials, welches Iridium und Palladium aber kein Platin enthält. Dann folgt eine Durchführung der Verfahrensschritte 60 bis 65 in derselben Weise wie bei der Behandlung eines Ausgangsmaterials 10, welches Iridium und Platin aber kein Palladium enthält. Schließlich werden die Verfahrensschritte 70 bis 75 in derselben Weise wie in allen voranstehend beschriebenen Ausführungsbeispielen des erfindungsgemäßen Verfahrens durchgeführt. Danach kann das Verfahren beendet werden 41. Dieses Ausführungsbeispiel des erfindungsgemäßen Verfahrens liefert drei separate wässrige Lösungen, die jeweils Chlorokomplexe eines der Metalle Palladium, Platin und Iridium enthalten. Durch Ausfällung der drei Metalle aus den jeweiligen Lösungen können diese in Reinform erhalten werden.

## Patentansprüche

1. Verfahren zur Trennung von Iridium aus mindestens einem Ausgangsmaterial (10), welches Iridium sowie Palladium und/oder Platin enthält, worin das Ausgangsmaterial (10) in einer wässrigen Lösung (20) mit einem pH-Wert von maximal 1 mit mindestens einem Oxidationsmittel behandelt wird (51, 61) und anschließend in der wässrigen Lösung (20) oder einer weiteren wässrigen Lösung mit einem pH-Wert von maximal 1 abwechselnd mit dem mindestens einen Oxidationsmittel oder mindestens einem weiteren Oxidationsmittel behandelt wird (71) und mit Wasserstoff behandelt wird (73).

2. Verfahren nach Anspruch 1, **dadurch gekennzeichnet, dass** das Ausgangsmaterial (10) Iridium und Palladium enthält, wobei es in der wässrigen Lösung (20) mit dem mindestens einen Oxidationsmittel behandelt wird (51).

3. Verfahren nach Anspruch 1, **dadurch gekennzeichnet, dass** das Ausgangsmaterial (10) Iridium und Platin enthält, wobei es in der wässrigen Lösung (20) abwechselnd mit dem mindestens einen Oxidationsmittel behandelt wird (61) und mit Kohlenmonoxid behandelt wird (63).

4. Verfahren nach Anspruch 1, **dadurch gekennzeichnet, dass** das Ausgangsmaterial (10) Iridium, Palladium und Platin enthält, wobei es in der wässrigen Lösung (20) mit dem mindestens einen Oxidationsmittel behandelt wird (51), anschließend in der wässrigen Lösung (20) oder der weiteren wässrigen Lösung abwechselnd mit dem mindestens einen Oxidationsmittel behandelt wird (61) und mit Kohlenmonoxid behandelt wird (63).

5. Verfahren nach Anspruch 3 oder 4, **dadurch gekennzeichnet, dass** zwischen der Behandlung (61) des Ausgangsmaterials (10) mit dem mindestens einen Oxidationsmittel und der Behandlung (63) des Ausgangsmaterials (10) mit Kohlenmonoxid ein Inertgas in die wässrige Lösung (20) oder die weitere wässrigen Lösung eingeleitet wird (62, 64).

6. Verfahren nach einem der Ansprüche 1 bis 4, **dadurch gekennzeichnet, dass** zwischen der Behandlung (71) des Ausgangsmaterials (10) mit dem mindestens einen Oxidationsmittel oder dem mindestens einen weiteren Oxidationsmittel und der Behandlung (73) des Ausgangsmaterials (10) mit Wasserstoff ein Inertgas in die wässrige Lösung (20) oder weitere wässrige Lösung eingeleitet wird (72, 74).

7. Verfahren nach einem der Ansprüche 1 bis 6, **dadurch gekennzeichnet, dass** das Oxidationsmittel Ozon enthält.

8. Verfahren nach einem der Ansprüche 1 bis 7, **dadurch gekennzeichnet, dass** die wässrige Lösung (20) 0,1 mol/l bis 10,0 mol/l Chloridionen enthält.

9. Verfahren nach einem der Ansprüche 1 bis 8, **gekennzeichnet durch** einen Schritt des Gewinnens des getrennten Iridiums aus der wässrigen Lösung (20) oder der weiteren wässrigen Lösung.

10. Vorrichtung (30) zur Trennung und/oder Gewinnung von Iridium aus mindestens einem Ausgangsmaterial (10), welches Iridium sowie Palladium und/oder Platin enthält, wobei die Vorrichtung (30) eingerichtet ist, um die Schritte eines Verfahrens nach einem der Ansprüche 1 bis 9 durchzuführen.
